# EUROPÄISCHE PATENTSCHRIFT

(11) **EP 2 354 557 B1**
(45) Veröffentlichungstag und Bekanntmachung des Hinweises auf die Patenterteilung: **18.09.2013**
(21) Anmeldenummer: 10405012.5
(22) Anmeldetag: 22.01.2010
(51) Int. Cl.: F16C 32/04, F04D 25/08, F04D 29/051, F04D 25/06, F04D 29/056, F04D 29/058

(54) **Vorrichtung mit einem Stator und einem in diesem gelagerten Rotor**
Device with a stator and a rotor laid within the stator
Dispositif doté d'un stator et d'un rotor installé dans celui-ci

(43) Veröffentlichungstag der Anmeldung: 10.08.2011
(73) Patentinhaber: Micronel AG, 8317 Tagelswangen (CH)
(72) Erfinder: Scherrer, Ernst, 8606 Greifensee (CH)
(74) Vertreter: Detken, Andreas

(56) Entgegenhaltungen:
- GB-A- 739 979
- GB-A- 2 417 616
- GB-A- 2 425 576
- US-A- 4 620 139
- US-A1- 2005 140 225

## Beschreibung

### TECHNISCHES GEBIET

Die vorliegende Erfindung betrifft eine Vorrichtung mit einem Stator und einem in diesem gelagerten Rotor nach dem Oberbegriff des Anspruchs 1.

### STAND DER TECHNIK

Eine Vorrichtung dieser Art ist im Stand der Technik durch die GB-A-2 417 616 bekannt geworden.

Im Stand der Technik sind solche Vorrichtungen beispielsweise als Motorgebläse bekannt geworden. Die beiden Lager für die Welle sind beispielsweise als Gleitlager ausgebildet. Die bekannten Nachteile solcher Gleitlager sind ein nicht zu vermeidende Abnützung, und die dadurch bedingte erhöhte Geräuschbildung sowie die verminderte Dauerhaftigkeit. Gemäss der DE-A-39 28 749 des Anmelders kann ein Rotor auch lediglich an einem Ende der Welle im Stator gelagert werden. Erforderlich ist hier jedoch eine axial Sicherung der Welle im Stator, die einen zusätzlichen Aufwand und insbesondere entsprechende Massnahmen bei der Montage erfordern.

Bekannt sind auch magnetische Lager, beispielsweise gemäss der DE-A-44 36 831 und DE-A-196 41 438. Solche Lager erfordern eine aufwändige Regelung und in der Regel supraleitende Materialen. Für viele Anwendungen, beispielsweise bei Kleinventilatoren sind solche Lager nicht anwendbar. Bekannt sind auch magnetisch entlastete Lager, die jedoch ebenfalls bei vielen Anwendungen nicht geeignet sind.

Der Erfindung liegt die Aufgabe zu Grunde, eine Vorrichtung der genannten Art zu schaffen, die wesentlich kostengünstiger herstellbar ist. Die Vorrichtung soll sich auch für Serienprodukte, wie beispielsweise Kleinventilatoren eignen.

Die Aufgabe ist gemäss Anspruch 1 gelöst. Bei der erfindungsgemässen Vorrichtung ist somit der Rotor einseitig mit einer Punktlagerung abgestützt, wobei Magnetkräfte eine nahezu zentrische Positionierung des Rotors bewirken. Versuche haben gezeigt, dass Masseträgheitskräfte des Rotors zur zusätzlichen Lagestabilisierung beitragen. Eine radiale Lagerung kann dann im Wesentlichen vollständig wegfallen. Bei einer Störung, beispielsweise einem Stoss, kann die Welle die zentrische Lage radial verlassen, wird dann aber durch magnetische Kräfte selbsttätig wieder in die zentrische Lage gebracht. Die beiden Lager können sehr kostengünstig realisiert werden. Erforderlich sind lediglich zwei Permanentmagnete. Die beiden Permanentmagnete können vergleichsweise klein ausgebildet sein und erfordern deshalb keinen wesentlichen zusätzlichen Platz. Eine axial Sicherung ist nicht erforderlich. Versuche haben gezeigt, dass sich die erfindungsgemässe Vorrichtung in Verbindung mit einem kollektorlosen Gleichstrom eignet, wie ein solcher insbesondere durch die CH-A-6 92 880 bekannt geworden ist. Ein solcher Gleichstrommotor übt auf den Rotor im Wesentlichen keine radialen sondern lediglich axialen Kraftkomponenten aus. Diese Vorteile ergeben sich auch dann, wenn die Welle als Permanentmagnet ausgebildet ist und die Lager jeweils einen ferromagnetischen Teil aufweisen.

Nach einer Weiterbildung der Erfindung ist vorgesehen, dass lediglich eines der beiden Enden der Welle punktförmig axial abgestützt ist und dass das andere Ende der Welle mechanisch frei beweglich ist. Eine Reibung ist somit lediglich an einem Ende der Welle in einem punktförmigen Bereich vorhanden. Die Reibungskräfte und der Abrieb können dadurch minimal gehalten werden. Das freie Ende der Welle ist mechanisch nicht belastet und lediglich dem Magnetfeld des entsprechenden Permanentmagneten ausgesetzt. So hat sich insbesondere gezeigt, dass eine solche Lagerung bei einem Kleinventilator mit einem kollektorlosen Gleichstrommotor sehr stabil ist und auch durch vergleichsweise hohe Erschütterungen nicht beschädigt wird.

Nach einer Weiterbildung der Erfindung ist vorgesehen, dass wenigstens ein Lager Mittel für eine radiale Zwangshalterung der Welle aufweist. Vorzugsweise sind beide Lager mit einer solchen radialen Zwangshalterung versehen. Bei einer Erschütterung verhindert eine solche Zwangshalterung eine nicht zulässige radiale Auslenkung der Welle bzw. des Rotors. Nach einer entsprechenden Auslenkung wird die Welle durch die magnetischen Kräfte selbstständig wieder zentriert. Die Zwangshalterung bzw. die Zwangshalterungen werden somit lediglich bei einer Schockbelastung wirksam. Die Zwangshalterung kann in einfacher Weise durch einen Kragen- oder hülsenförmigen Teil des Lagers realisiert werden.

Nach einer Weiterbildung der Erfindung ist vorgesehen, dass der eine Permanentmagnet auf die Welle anziehend und der andere Permanentmagnet auf die Welle abstossend wirkt. Die Welle liegt punktförmig am anziehenden Permanentmagnet an. Auf der abstossenden Seite ist die Welle dann vorzugsweise mechanisch frei beweglich bzw. besitzt zum abstossenden Permanentmagneten einen Abstand. Dieser Abstand kann sehr klein sein, beispielsweise wenige hundertstel mm betragen. Die Welle kann sehr kostengünstig aus einem ferromagnetischen Material hergestellt werden. Denkbar ist auch eine Ausführung, bei welcher bei der Permanentmagnete auf die Welle anziehend wirken. Vorzugsweise wirkt hierbei der eine Permanentmagnet eine grössere Anziehungskraft aus als der andere Permanentmagnet.

Die Welle kann direkt punktförmig an einen der beiden Permanentmagnete anliegen. Denkbar ist hier jedoch auch eine indirekte Lagerung, beispielsweise eine Lagerung der Welle an einem reibungsmindernden Belag, welcher im einem Permanentmagneten angeordnet ist. Als Material für einen solchen Belag eignet sich insbesondere Polyamid, vorzugsweise ein Kunststoff bzw. ein Polyamid welches Molybdän enthält.

Ist die Welle als Permanentmagnet ausgebildet, so ist die Zentrierung der Welle dann besonders stabil, wenn wenigstens ein ferromagnetischer Teil zur Welle hin bombiert ist.

Weitere vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnung näher erläutert. Es zeigen:
- Figur 1: schematisch ein Schnitt durch eine erfindungsgemässe Vorrichtung,

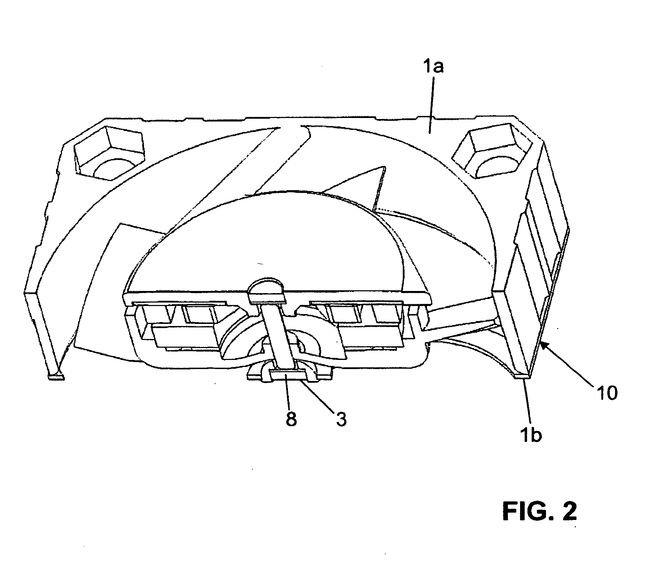

- Figur 2: schematisch eine räumliche Ansicht einer axial geschnittenen Vorrichtung gemäss Figur 1,
- Figur 3: eine Ansicht der erfindungsgemässen Vorrichtung in Richtung des Pfeils III Figur 1,

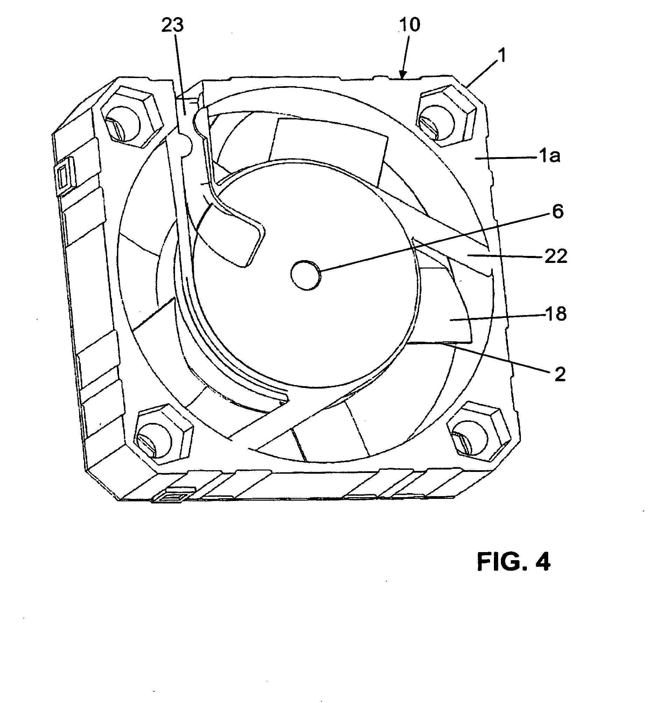

- Figur 4: eine schematische räumliche Ansicht der erfindungsgemässen Vorrichtung in Richtung des Pfeils IV in Figur 1 und
- Figur 5: eine räumliche Ansicht einer axial geschnittenen Vorrichtung nach einer Variante.

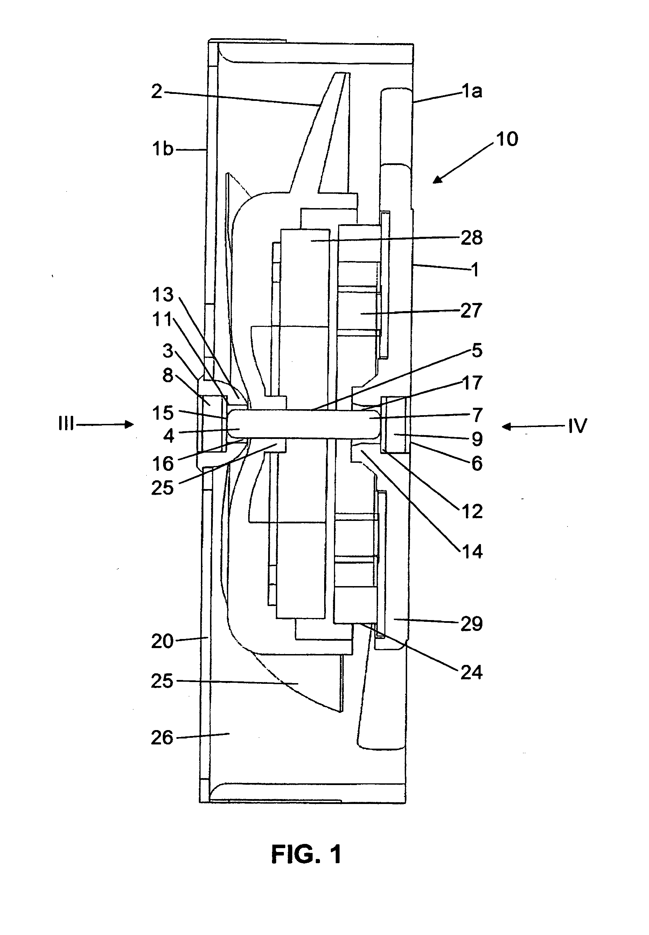

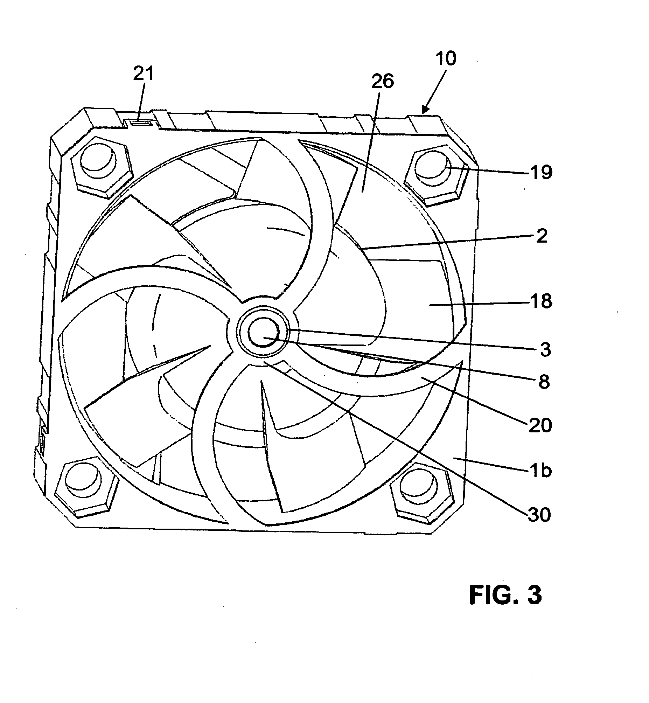

Die Vorrichtung 10 bildet ein Gebläse oder einen Ventilator und insbesondere einen Kleinventilator, der einen Stator 1 aufweist, in dem ein Rotor 2 gelagert ist. Der Stator 1 besteht aus zwei Statorteilen 1a und 1b, die gemäss Figur 3 mit Rastzungen 21 lösbar miteinander verbunden sind. Der Statorteil 1a ist hier ersichtlich rechtwinklig und kastenförmig ausgebildet, während der Statorteil 1b im Wesentlichen eben und plattenförmig ausgebildet ist. Damit der Stator 1 bei drehendem Rotor 2 in axialer Richtung durchströmt werden kann, sind die beiden Statorteile 1a und 1b offen, so dass diese einen Durchlass 26 bilden. Dieser ermöglicht in Figur 1 bei drehendem Rotor 2 eine Luftströmung von rechts nach links.

Der Statorteil 1a besitzt mittig eine Lagerplatte 29, die über Stege 22 mit dem rahmenförmigen Teil des Statorteils 1a verbunden ist. Auf der einen Seite dieser Lagerplatte 29 sind eine Spule 27 und hier nicht weiter gezeigte Steuerelemente eines kollektorlosen Gleichstrommotors angeordnet. Die Spule 27 wirkt mit einem ringförmigen Magnet 28 zusammen, der mit dem Rotor 2 verbunden ist. Der kollektorlose Gleichstrommotor kann gemäss der CH-A-692 880 ausgebildet sein. Denkbar ist hier aber auch ein anderer geeigneter Motor. Der Statorteil 1b besitzt gemäss Figur 3 ebenfalls mehrere Stege 10, die mittig über einen Ring 30 miteinander verbunden sind. Auf diesem Ring 30 ist ein erstes Lager 3 befestigt. Das Lager 30 besitzt einen ringförmigen ersten Halter 13, in dem ein erstes Permanentmagnet 8 befestigt ist. Der erste Halter 13 ist in den Ring 30 eingesetzt und an diesen beispielsweise mit hier nicht gezeigten Rastmittel befestigt. Der Permanentmagnet 8 ist fest mit dem ersten Halter 13 verbunden. Ein zweites Lager 6 wird durch einen zweiten Permanentmagnet 9 und einen zweiten Halter 14 gebildet. Dieser zweite Halter 14 ist ein Teil der Lagerplatte 29. Der zweite Permanentmagnet 9 ist fest mit diesem zweiten Halter 14 bzw. mit der Lagerplatte 29 verbunden. Der Permanentmagnet 9 und der zweite Halter 14 bilden ein zweites Lager 6.

Die beiden Lager 3 und 6 dienen zur Lagerung einer Welle 5 des Rotors 2. Diese Welle 5 ist über einen Flansch 25 fest mit dem Rotor 2 verbunden und besitzt ein erstes Ende 4 und ein zweites Ende 7. Das erste Ende 4 ist hier wesentlich kürzer als das zweite Ende 7. Die Welle 5 besteht aus einem ferromagnetischen Material und wird in axialer Richtung zumindest vom ersten Permanentmagnet 8 angezogen. Der zweite Permanentmagnet 9 kann so ausgebildet sein, dass auf das zweite Ende 7 bzw. auf die Welle 5 eine abstossende Wirkung ausübt. Möglich ist auch eine Ausführung, bei welcher der zweite Permanentmagnet 9 auf die Welle 5 anziehend wirkt, die anziehende Kraft jedoch wesentlich kleiner ist als diejenige des ersten Permanentmagneten 8. Die Welle 5 wird somit gegen den ersten Permanentmagneten 8 gezogen und liegt an diesem an einer Berührungsstelle 15 punktförmig an. Das erste Ende 4 ist entsprechend wie ersichtlich bombiert ausgebildet. An der Seite, an welcher die Welle 5 am ersten Permanentmagnet 8 anliegt, ist dieser mit einem flächigen Belag 11 versehen, der aus einem reibungsarmen Material, beispielsweise aus Polyamid hergestellt ist. Das Polyamid kann Molybdän enthalten, um den Reibungswiderstand möglichst klein zu halten. Denkbar ist jedoch auch eine Ausführung, bei welcher das erste Ende 4 direkt am Permanentmagneten 8 anliegt. Der Permanentmagnet 8 kann wie gezeigt auf beiden Seiten mit einem Belag 11 versehen sein. Beim Montieren kann dann der Permanentmagnet 8 in beiden Orientierungen eingesetzt werden. Das erste Ende 4 ist wie ersichtlich vergleichsweise kurz. Der Flansch 25 besitzt somit zum ersten Permanentmagneten 8 einen vergleichsweise kurzen Abstand. Der Abstand ist jedenfalls um ein mehrfaches kleiner als der Abstand zum zweiten Permanentmagneten 9. Die Fläche des Belages 11, an welchem die Welle 5 anliegt, ist vorzugsweise eben, es ist jedoch auch eine unebene Fläche denkbar.

Zwischen dem ersten Halter 13 und dem ersten Ende 4 besteht ein ringförmiger Zwischenraum 16. Bei drehendem Rotor 2 wird üblicherweise der erste Halter 13 nicht berührt. Da das erste Ende 4 lediglich durch die magnetische Kraft des ersten Permanentmagneten 8 gehalten wird, kann dieses erste Ende 4 bei einer starken Stossbelastung der Vorrichtung 10 radial ausgelenkt werden. Diese radiale Auslenkung wird durch den ersten Halter 13 begrenzt. Das erste Ende 4 kann somit das magnetische Feld des ersten Permanentmagneten 8 nicht verlassen und wird durch dieses Feld nach einer solchen Belastung jeweils wieder zentriert. Der zweite Halter 14 besitzt eine entsprechende Funktion bezüglich des zweiten Endes 7. Der entsprechende Zwischenraum ist hier mit dem Bezugszeichen 17 versehen. Zwischen dem zweiten Ende 7 und dem zweiten Permanentmagneten 9, der ebenfalls mit einem Belag 12 versehen ist, kann ein geringfügiger Abstand bestehen. Das Ende 7 kann aber auch elastisch am zweiten Permanentmagneten 9 anliegen. Diese elastische Kraft, die vergleichsweise gering ist, kann durch die Stege 20 des Statorteils 1b ausgeübt werden. Die Berührung des zweiten Endes 7 am zweiten Permanentmagneten 9 ist in diesem Fall ebenfalls punktförmig.

Der Motor besitzt vorzugsweise eine axiale Krafteinleitung auf den Rotor 2. Dies ermöglicht eine besonders stabile Lagerung des Rotors 2. In radialer Richtung übt der Motor somit auf den Rotor 2 im Wesentlichen keine Kraft aus. Bei drehendem Rotor 2 unterstützen zudem Massenträgheitskräfte die Lagerstabilität.

Die Vorrichtung 10 ist in dem gezeigten Ausführungsbeispiel ein Ventilator mit axialer Luftdurchströmung und somit ein Lüfter. Grundsätzlich kann die Vorrichtung 10 jedoch auch von Gebläse bzw. ein Radialventilator sein. Anstelle von Luft kann die Vorrichtung 10 aber auch an einem anderen Medium, beispielsweise von Wasser durchströmt sein. Schliesslich kann die Vorrichtung 10 beispielsweise als Turbine ausgebildet sein. Das durchströmende Medium treibt dann somit den Rotor 2 an, der über einen Generator Strom erzeugt. Die Vorrichtung 10 kann beispielsweise in einem Gerät fest montiert sein. Hierzu sind am Stator 1 vier Durchbrüche 19 vorgesehen, die beispielsweise zur Aufnahme hier nicht gezeigte Befestigungsschrauben oder dergleichen geeignet sind. Der Rotor 2 ist beim gezeigten Ausführungsbeispiel mit mehreren Flügeln 18 versehen. Diese Flügel 18 können unterschiedlich je nach Anwendung ausgebildet sein.

Die Vorrichtung 10 kann bezüglich der Lagerung ausserordentlich kostengünstig hergestellt werden. Schmierstoffe sind nicht erforderlich. Die Reibung des Rotors 2 am Stator 1 ist ausserordentlich klein. Über einen breiten Temperaturbereich treten im Wesentlichen keine Lagerreibungsänderungen auf. Als Permanentmagnete 8 und 9 eignen sich viele an sich bekannte Magnete. Es sind somit keine speziellen Magnete erforderlich und auch eine Regelung ist nicht notwendig. Das Lager ist somit ein passives Magnetlager.

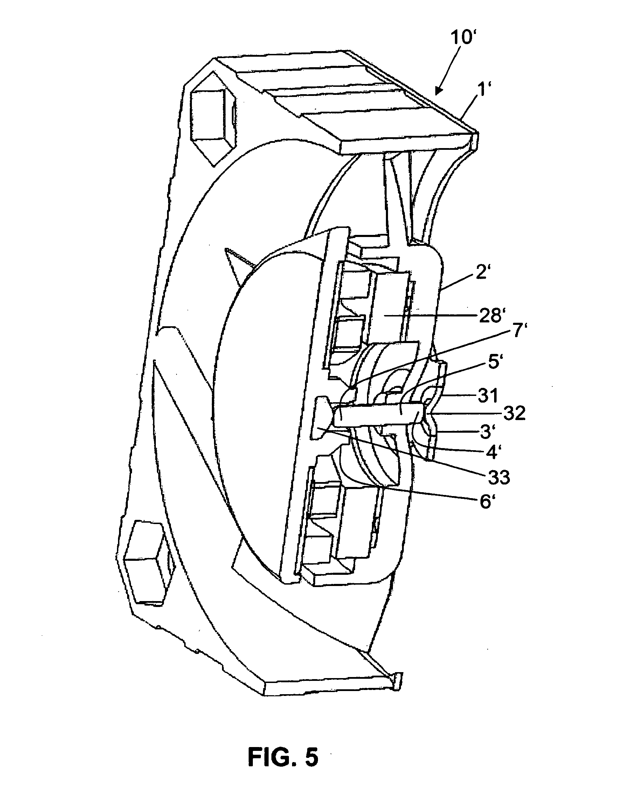

Die in Figur 5 dargestellte Vorrichtung 10' besitzt ebenfalls einen Stator 1' und einen Rotor 2' der einen Motor mit einem Magneten 28' aufweist. Bei dieser Ausführung ist jedoch die Welle 5' als Permanentmagnet ausgebildet. Die Lager 3' und 6' besitzen jeweils einen ferromagnetischen Teil 32 bis 33, an denen die Welle 5' punktförmig gelagert ist. Die beiden Teile 32 und 33 sind wie ersichtlich jeweils zum ersten Ende 4' bzw. zum zweiten Ende 7' hin bombiert. Dadurch ergibt sich ein magnetisches Feld, welches die Welle 5' zentriert und nach einer Störung selbsttätig wieder in die zentrische Lage zurückbringt.

### BEZUGSZEICHENLISTE

- 1: Stator 1 a Statorteil
- 1b: Statorteil
- 2: Rotor
- 3: erstes Lager
- 4: erstes Ende
- 5: Welle
- 6: zweites Lager
- 7: zweites Ende
- 8: erstes Permanentmagnet
- 9: zweites Permanentmagnet
- 10: Vorrichtung
- 11: Belag
- 12: Belag
- 13: erster Halter
- 14: zweiter Halter
- 15: Berührungswelle
- 16: Zwischenraum
- 17: Zwischenraum
- 18: Flügel
- 19: Durchbrüche
- 20: Steg
- 21: Rastzunge
- 22: Steg
- 23: Anschlussöffnung
- 24: Rotor
- 25: Flansch
- 26: Durchlass
- 27: Spule
- 28: Magnet
- 29: Lagerplatte
- 30: Ring
- 31: Lagerteil
- 32: Bombierung
- 33: Lagerteil

## Patentansprüche

1. Vorrichtung mit einem Motor, einem Stator (1) und einem im Stator (1) gelagerten und vom Motor angetriebenen Rotor (2), welcher Stator (1) ein erstes Lager (3) für ein erstes Ende (4) einer Welle (5) des Rotors (2) und ein zweites Lager (6) für ein zweites Ende (7) der genannten Welle (5) aufweist,
wobei das erste und das zweite Lager (3, 6) jeweils einen Permanentmagneten (8, 9) aufweisen, der eine magnetische Kraft auf die Welle (5) ausübt oder die Welle (5) als Permanentmagnet ausgebildet ist und das erste und das zweite Lager (3, 6) jeweils einen ferromagnetischen Teil (32, 33) aufweisen, wobei wenigstens eines der beiden Enden (4, 7) der Welle (5) mittels eines Punktlagers axial abgestützt ist, **dadurch gekennzeichnet, dass** der Motor ein kollektorloser Gleichstrommotor und so ausgebildet ist, dass er eine axiale Krafteinleitung auf den Rotor (2) besitzt und auf diesen im Wesentlichen keine radiale Kraftkomponente ausübt.

2. Vorrichtung nach Anspruch 1, **dadurch gekennzeichnet, dass** lediglich eines der beiden Enden (4) punktförmig axial abgestützt ist.

3. Vorrichtung nach Anspruch 1 oder 2, **dadurch gekennzeichnet, dass** wenigstens eines der beiden Lager (3, 6) Mittel für eine radiale Zwangshalterung der Welle (5) aufweist.

4. Vorrichtung nach einem der Ansprüche 1 bis 3, **dadurch gekennzeichnet, dass** wenigstens einer der beiden Permanentmagnete (8, 9) oder wenigstens ein Ende (6, 7) der Welle (5) wenigstens einen reibungsmindernden Belag (11, 12) aufweist.

5. Vorrichtung nach Anspruch 4, **dadurch gekennzeichnet, dass** der Belag (11, 12) aus einem Kunststoff, insbesondere aus Polyamid hergestellt ist.

6. Vorrichtung nach Anspruch 5, **dadurch gekennzeichnet, dass** der Kunststoff einen reibungsvermindernden Anteil, beispielsweise Molybdän aufweist.

7. Vorrichtung nach einem der Ansprüche 1 bis 6, **dadurch gekennzeichnet, dass** sie ein Ventilator oder ein Gebläse und insbesondere ein Kleinventilator oder ein Kleingebläse ist.

8. Vorrichtung nach einem der Ansprüche 1 bis 7, **dadurch gekennzeichnet, dass** sie als Turbine ausgebildet ist.

9. Vorrichtung nach einem der Ansprüche 1 bis 8, **dadurch gekennzeichnet, dass** wenigstens eines der beiden ferromagnetischen Teile (32, 33) zur Welle (5) hin bombiert ist.

## Claims

1. Apparatus having a motor, a stator (1) and a rotor (2) which is mounted in said stator and driven by the motor, which stator (1) has a first bearing (3) for a first end (4) of a shaft (5) of the rotor (2), and a second bearing (6) for a second end (7) of the said shaft (5), wherein the first and the second bearings (3, 6) respectively have a permanent magnet (8, 9), which exerts a magnetic force on the shaft (5), or the shaft (5) is in the form of a permanent magnet and the first and the second bearings (3, 6) respectively have a ferromagnetic part (32, 33), wherein at least one of the two ends (4, 7) of the shaft (5) is supported axially by means of a point bearing, **characterized in that** the motor is a direct-current motor without a commutator and being designed such that force is introduced axially to the rotor (2) and essentially no radial force component is exerted on the rotor.

2. Apparatus according to Claim 1, **characterized in that** only one of the two ends (4) is supported axially at a point.

3. Apparatus according to Claim 1 or 2, **characterized in that** at least one of the two bearings (3, 6) has means for radially positively holding the shaft (5).

4. Apparatus according to one of claims 1 to 3, **characterized in that** at least one of the two permanent magnets (8, 9) or at least one end (6, 7) of the shaft (5) has at least one friction-reducing coating (11, 12).

5. Apparatus according to Claim 4, **characterized in that** the coating (11, 12) is produced from a plastic, in particular from polyamide.

6. Apparatus according to Claim 5, **characterized in that** the plastic has a friction-reducing component, for example molybdenum.

7. Apparatus according to one of Claims 1 to 6, **characterized in that** the apparatus is a fan, and in particular a small fan.

8. Apparatus according to one of Claims 1 to 7, **characterized in that** the apparatus is in the form of a turbine.

9. Apparatus according to one of Claims 1 to 8, **characterized in that** at least one of the two ferromagnetic parts (32, 33) is curved towards the shaft (5).

## Revendications

1. Dispositif avec un moteur, un stator (1) et un rotor (2) positionné dans le stator (1) et entraîné par le moteur, lequel stator (1) présente un premier palier (3) pour une première extrémité (4) d'un arbre (5) du rotor (2) et un deuxième palier (6) pour une deuxième extrémité (7) dudit arbre (5), dans lequel le premier et le deuxième palier (3, 6) présentent respectivement un aimant permanent (8, 9), qui exerce une force magnétique sur l'arbre (5) ou l'arbre (5) est réalisé comme un aimant permanent et le premier et le deuxième palier (3, 6) présentent respectivement une pièce ferromagnétique (32, 33), dans lequel au moins une des deux extrémités (4, 7) de l'arbre (5) est appuyée axialement au moyen d'un palier ponctuel, **caractérisé en ce que** le moteur est un moteur à courant continu sans collecteur et est conçu de telle sorte qu'il possède une induction de force axiale sur le rotor (2) et n'exerce sur celui-ci essentiellement aucun composant de force radial.

2. Dispositif selon la revendication 1, **caractérisé en ce que** uniquement une des deux extrémités (4) est appuyée axialement en forme de point.

3. Dispositif selon les revendications 1 ou 2, **caractérisé en ce que** au moins un des deux paliers (3, 6) présente un moyen de soutien contraint radial de l'arbre (5).

4. Dispositif selon une des revendications 1 à 3, **caractérisé en ce que** au moins un des deux aimants permanents (8, 9) ou au moins une extrémité (6, 7) de l'arbre (5) présentent au moins un revêtement (11, 12) réduisant la friction.

5. Dispositif selon la revendication 4, **caractérisé en ce que** le revêtement (11, 12) est fabriqué dans un plastique, notamment un polyamide.

6. Dispositif selon la revendication 5, **caractérisé en ce que** le plastique présente une fraction réduisant la friction, par exemple du molybdène.

7. Dispositif selon une des revendications 1 à 6, **caractérisé en ce que** il s'agit d'un ventilateur ou une soufflante et notamment un petit ventilateur ou une petite soufflante.

8. Dispositif selon une des revendications 1 à 7, **caractérisé en ce qu'**il est conçu comme une turbine.

9. Dispositif selon une des revendications 1 à 8, **caractérisé en ce que** au moins une des deux pièces ferromagnétiques (32, 33) est bombée dans la direction de l'arbre (5).
